# EUROPEAN PATENT APPLICATION

(11) **EP 4 685 521 A1**
(43) Date of publication of application: **28.01.2026**
(21) Application number: 24934446.6
(22) Date of filing: 09.04.2024
(51) Int. Cl.: G01S 17/86

(54) **INTEGRATED SENSOR AND MOVABLE PLATFORM**

(71) Applicant: Shenzhen Zhuoyu Technology Co., Ltd., Shenzhen, Guangdong 518057 (CN)
(72) Inventor: BAO, Adam, Shenzhen, Guangdong 518057 (CN); HE, Yingang, Shenzhen, Guangdong 518057 (CN); CHEN, Job, Shenzhen, Guangdong 518057 (CN); LI, Hongshan, Shenzhen, Guangdong 518057 (CN); ZHANG, Han, Shenzhen, Guangdong 518057 (CN); LIU, Dean, Shenzhen, Guangdong 518057 (CN); JIANG, Donce, Shenzhen, Guangdong 518057 (CN); JIA, Zhenjie, Shenzhen, Guangdong 518057 (CN); ZHANG, Stethen, Shenzhen, Guangdong 518057 (CN); ZHANG, Yann, Shenzhen, Guangdong 518057 (CN); DANG, Xinming, Shenzhen, Guangdong 518057 (CN)
(74) Representative: Hautier IP - MC/EP
(86) International application number: PCT/CN2024/086838
(87) International publication number: WO 2025/213362

(57) **Abstract**

An integrated sensor including a housing with an internal cavity; a control circuit board disposed inside the cavity; a binocular vision camera disposed on the housing and including a left-eye camera and a right-eye camera electrically connected to the control circuit board; and a LiDAR electrically connected to the control circuit board, wherein an optical window of the LiDAR is disposed on the housing, and a ranging module of the LiDAR is disposed inside the cavity and is configured to emit and receive a laser beam which exits and returns through the optical window. The integrated sensor provided herein can be mounted externally or internally on a vehicle, overcoming drawbacks of scattered sensor layouts and inconsistent fields of view. The binocular vision camera provides the vehicle with visual image information of the surrounding environment, the LiDAR provides the vehicle with three-dimensional point cloud data, and the control circuit board performs comprehensive analysis of the visual image information and three-dimensional point cloud data, thereby meeting the growing demand of intelligent driving.

## Description

### TECHNICAL FIELD

The present application relates to the field of intelligent driving, particularly to an integrated sensor and a mobile platform utilizing the sensor.

### BACKGROUND

Currently, intelligent driving vehicles perceive their surroundings through various sensors installed thereon, and then analyze acquired information by an onboard control system to make appropriate decisions, thereby achieving intelligent driving. Common onboard sensors include vision cameras, LiDAR, millimeter-wave radar, ultrasonic radar, etc.

Vision cameras suffer from significant environmental susceptibility. Lighting conditions (excessively bright or dim), weather conditions (fog, rain, snow) will impact image clarity. Furthermore, distance cannot be measured directly, requiring estimation through algorithms (which may lack precision or reliability). Processing high-resolution image data typically demands substantial computational power.

The drawback of LiDAR lies in its high cost (typically more expensive than vision cameras). While it can measure distance, it has limitations in perceiving object surface textures and colors. The resulting three-dimensional point cloud data requires complex algorithms for processing to extract useful information.

Some existing intelligent driving vehicles have only a single sensor (e.g., vision cameras or LiDAR), resulting in limited data acquisition that fails to meet the growing demands of intelligent driving. Some intelligent driving vehicles, while equipped with multiple sensors, feature a scattered sensor layout (e.g., sensors mounted on the roof and rearview mirrors outside the vehicle, as well as front and rear windshields inside the vehicle). This can result in inconsistent fields of view among sensors, making it difficult to perform comprehensive data analysis.

### SUMMARY OF THE INVENTION

In view of the drawbacks in the prior art, the present application provides an integrated sensor comprising:
a housing with an internal cavity;
a control circuit board disposed inside the cavity;
a binocular vision camera disposed on the housing, comprising a left-eye camera and a right-eye camera electrically connected to the control circuit board; and
a LiDAR electrically connected to the control circuit board, wherein an optical window of the LiDAR is disposed on the housing, and a ranging module of the LiDAR is disposed inside the cavity and is configured to emit and receive a laser beam which exits and returns through the optical window.

In some embodiments, the binocular vision camera and the ranging module are equipped with photosensitive chips having the same scanning mode, enabling pixel-level alignment between the images captured by the binocular vision camera and the three-dimensional point cloud data acquired by the LiDAR.

In some embodiments, a long-range vision camera is disposed on the housing and electrically connected to the control circuit board.

In some embodiments, the binocular vision camera, the optical window of the LiDAR, and the long-range vision camera face a front side of the housing; and
the control circuit board is electrically connected to a power supply interface and a communication interface, wherein the power supply interface and the communication interface are partially exposed outside the housing.

In some embodiments, sealing elements are provided or sealant is filled at contact surfaces between the housing and each of the binocular vision camera, the optical window of the LiDAR, the long-range vision camera, the power supply interface, and the communication interface.

In some embodiments, the housing comprises an upper housing and a lower housing that are engaged to form the cavity, wherein a sealing element is provided or a sealant is filled between the upper housing and the lower housing.

In some embodiments, the surfaces of the upper housing and the lower housing are provided with heat sinks.

In some embodiments, the binocular camera, the LiDAR, and the long-range vision camera are respectively connected to the control circuit board via a flexible circuit board, which is affixed to the control circuit board or inside the cavity of the housing.

In some embodiments, at least one clamping plate is disposed on the control circuit board or inside the cavity of the housing; and
the binocular camera, the LiDAR, and the long-range vision camera are respectively connected to the control circuit board via a flexible circuit board, which is secured onto the control circuit board or inside the cavity of the housing by the clamping plate.

In some embodiments, an inertial sensor disposed inside the cavity and electrically connected to the control circuit board.

In some embodiments, the control circuit board and the LiDAR are arranged in a stacked configuration, wherein a shielding cover is provided to cover at least a portion of the control circuit board corresponding to the LiDAR to prevent the laser beam emitted by the ranging module from being reflected by the control circuit board and forming stray light.

In some embodiments, the control circuit board is provided with support brackets maintaining a gap from the edge of the control circuit board, wherein the shielding cover is connected to the support brackets and extends to the edge of the control circuit board.

In some embodiments, a bottom of the optical window is positioned further forward than a top of the optical window, such that the optical window is tilted in the vertical direction.

In some embodiments, a tilt angle of the optical window is 3° to 65°.

In some embodiments, the ranging module comprises:
a light source plate configured to emit a laser beam;
a collimating lens configured to collimate the laser beam;
a diffusion plate configured to diffuse the collimated laser beam in a vertical direction; and
a prism configured to converge the diffused laser beam in the vertical direction to reduce an exit aperture of the LiDAR.

In some embodiments, the ranging module comprises:
a light source plate configured to emit a laser beam; and
a cylindrical lens and a prism, or a combination lens with one side serving as a prism and the other side serving as a cylindrical lens, configured to collimate the laser beam and then converge it in a vertical direction to reduce the exit aperture of the LiDAR.

In some embodiments, the light source board comprises a dot matrix light source, wherein the control circuit board controls a portion of dot light sources in the dot matrix light source to turn off, so that the lower left and lower right corners of the rectangular laser scanning plane emitted through the optical window are chamfered.

Additionally, the present application also provides a mobile platform comprising any one of the aforementioned integrated sensors.

The integrated sensor provided herein may be mounted externally on the vehicle (e.g., on the roof) or internally on the vehicle (e.g., on the front windshield and/or rear windshield), thereby overcoming drawbacks such as scattered sensor layouts and inconsistent fields of view among individual sensors. Simultaneously, the binocular vision camera can provide the vehicle with visual image information of the surrounding environment, while the LiDAR can supply three-dimensional point cloud data. The control circuit board performs comprehensive analysis of the visual image information and three-dimensional point cloud data to meet the growing demand of intelligent driving.

### BRIEF DESCRIPTION OF THE DRAWINGS

FIG. 1 is a front schematic diagram of the integrated sensor according to an embodiment of the present application.
FIG. 2 is a rear schematic diagram of the integrated sensor shown in FIG. 1.
FIG. 3 is a schematic diagram of the internal structure of the integrated sensor shown in FIG. 1, with the upper housing removed.
FIG. 4 is a schematic diagram of the internal structure of the integrated sensor shown in FIG. 3, with the control circuit board removed.
FIG. 5 is a schematic diagram of the structure of a control circuit board of an integrated sensor.
FIG. 6 shows a schematic diagram of the control circuit board shown in FIG. 5, with shielding cover removed.
FIG. 7 shows a partial enlarged view of the control circuit board shown in FIG. 5.
FIG. 8 is a side schematic diagram of the integrated sensor shown in FIG. 1.
FIG. 9 illustrates a laser incidence/reflection at an optical window of a LiDAR.
FIG. 10 shows an installation position of the light shield in the vehicle cab.
FIG. 11 is a schematic diagram of the integrated sensor with a light shield.
FIG. 12 is a schematic diagram of the structure of a transmitter end of a ranging module of an existing LiDAR.
FIG. 13 is a schematic diagram of the structure of an emitter end of a ranging module of a LiDAR according to an embodiment of the present application.
FIG. 14 is a schematic diagram of the structure of an emitter end of a ranging module of a LiDAR according to another embodiment of the present application.
FIG. 15 shows the rectangular dot matrix light source of an existing LiDAR.
FIG. 16 shows a rectangular scanning plane formed in front of an optical window by the LiDAR from FIG. 15.
FIG. 17 shows a chamfered rectangular dot matrix light source of a LiDAR according to an embodiment of the present application.
FIG. 18 shows a chamfered rectangular scanning plane formed in front of an optical window by the LiDAR from FIG. 17.

Description of the reference signs:
Integrated sensor 100;
Housing: 10; Upper housing: 11;
Lower housing: 12; Clamping plate: 13;
Control circuit board: 20; Power supply interface: 21;
Communication interface: 22; Shielding cover: 23;
Mounting clip: 23a; Bent edge: 23b; Support bracket: 24;
Binocular vision camera: 30; Left-eye camera: 31;
Flexible circuit board: 31a; Right-eye camera: 32;
Flexible circuit board: 32a;
LiDAR: 40; Optical window: 41;
Ranging module: 42; Flexible circuit board: 42a;
Flexible circuit board: 42b; Light source board: 42c;
Collimating lens: 42d; Diffuser plate: 42e;
Prism: 42f; Cylindrical lens: 42g;
Rotating mirror module: 43; Flexible circuit board: 43a;
Long-range vision camera: 50; Flexible circuit board: 50a;
Inertial sensor: 60; Light shield: 70.

### DETAILED DESCRIPTION

To make the objectives, technical solutions, and advantages of the embodiments of the present application clearer, the technical solutions of the embodiments of the present application will be described below with reference to the accompanying drawings. Apparently, these embodiments are only a part rather than all embodiments of the present application. Based on these embodiments, all other embodiments obtained by a person skilled in the art without inventive effort shall fall within the scope of protection of the present application.

The present application provides an integrated sensor 100, primarily applied to a mobile platform. Mobile platforms may include vehicles, unmanned aerial vehicles, robots, etc. The following description will detail the integrated sensor 100 by using its application in vehicles having intelligent driving functions as an example.

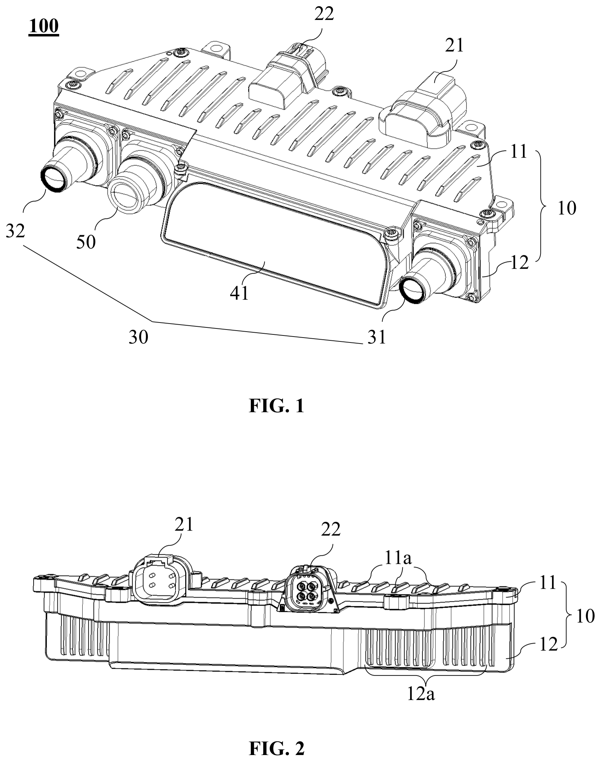

As shown in FIGS. 1 to 4, an embodiment of the present application provides an integrated sensor 100, primarily including a housing 10, a control circuit board 20, a binocular vision camera 30, and a LiDAR 40. The housing 10 has an internal cavity, in which the control circuit board 20 is disposed. The binocular vision camera 30 is disposed on the housing 10 and includes a left-eye camera 31 and a right-eye camera 32, both electrically connected to the control circuit board 20. The LiDAR 40 is electrically connected to the control circuit board 20. An optical window 41 of the LiDAR 40 is disposed on the housing 10. A ranging module 42 of the LiDAR 40 is disposed in the cavity and is configured to emit and receive a laser beam. The laser beam exits and returns through the optical window 41.

In an embodiment, the binocular vision camera 30 includes a left-eye camera 31 and a right-eye camera 32. The principle of binocular vision involves obtaining the parallax of each pixel point through left and right images, reconstructing three-dimensional information based on the principle of triangulation, and thereby identifying obstacles. Its ranging principle is similar to that of human eyes. The binocular vision camera 30 typically has a wide field of view, facilitating detection of the surrounding environment. LiDAR 40 generally measures the distance to a target by calculating the time difference between the emission and reception of electromagnetic waves. To match the image of the binocular vision camera 30, the field of view of LiDAR 40 is typically consistent with that of the binocular vision camera 30, facilitating data comparison.

In one embodiment, the optical window 41 of the LiDAR 40 is disposed between the left-eye camera 31 and the right-eye camera 32, aligned on the same horizontal plane as these cameras. In other embodiments, the optical window 41 may be placed to the left of the left-eye camera 31, to the right of the right-eye camera 32, or above or below the binocular camera.

A person skilled in the art will appreciate that the integrated sensor 100 may be mounted externally on the vehicle (e.g., on the roof) or internally on the vehicle (e.g., on the front windshield and/or rear windshield), thereby overcoming drawbacks such as scattered sensor layouts and inconsistent fields of view among individual sensors. Meanwhile, the binocular vision camera 30 can provide the vehicle with visual image information of the surrounding environment, while the LiDAR 40 can supply three-dimensional point cloud data. The control circuit board 20 performs comprehensive analysis of the visual image information and three-dimensional point cloud data to meet the growing demand of intelligent driving.

Further, the binocular vision camera 30 and the receiving end of the ranging module 42 are equipped with photosensitive chips with identical scanning modes. This enables pixel-level alignment between the images captured by the binocular vision camera 30 and the three-dimensional point cloud data acquired by the LiDAR 40.

In the embodiment, the binocular vision camera 30 employs a column-scan photosensitive chip, and the receiving end of the ranging module 42 also employs a column-scan photosensitive chip. In other embodiments, both may employ line-scan, point-scan, or area-scan photosensitive chips.

A person skilled in the art will appreciate that: firstly, the control circuit board 20 may be pre-configured with a synchronization algorithm to synchronize visual images and three-dimensional point cloud data (e.g., an algorithm that controls the binocular vision camera 30 and the ranging module 42 to synchronously emit/receive the same column). This algorithmic synchronization enables pixel-level alignment between the images captured by the binocular camera 30 and the three-dimensional point cloud data acquired by the LiDAR 40, significantly enhancing perception accuracy. Secondly, the LiDAR 40 can also serve as a safety redundancy for the binocular vision camera 30, allowing for reduced performance requirements on the LiDAR 40. The range and the field of view of the LiDAR 40 are only needed to cover those of the binocular vision camera 30, thereby lowering unit costs compared to an independently working LiDAR 40.

Further, the integrated sensor 100 includes a long-range vision camera 50 disposed on the housing 10 and electrically connected to the control circuit board 20.

In one embodiment, the long-range vision camera 50 is disposed between the optical window 41 and the right-eye camera 32, aligned on the same horizontal plane as the left-eye camera 31 and right-eye camera 32. Its field of view is typically narrow, primarily used to detect distant objects (e.g., traffic lights, road sign information, etc.).

In other embodiments, the long-range vision camera 50 may also be disposed between the optical window 41 and the left-eye camera 31, or to the left of the left-eye camera 31 or to the right of the right-eye camera 32. Furthermore, the long-range vision camera 50 may be disposed above or below the horizontal line where the left-eye camera 31 and the right-eye camera 32 lie in.

The binocular vision camera 30, the optical window 41 of the LiDAR 40, and the long-range vision camera 50 face the front side of the housing 10. The control circuit board 20 is electrically connected to a power supply interface 21 and a communication interface 22 (e.g., using surface mount technology, SMT). The power supply interface 21 and the communication interface 22 are partially exposed outside the housing 10.

In the embodiments of the present application, the power supply interface 21 and the communication interface 22 extend outward from the rear side of the housing 10 to prevent power supply cables and the communication cables from obstructing the binocular vision camera 30, the optical window 41 of the LiDAR 40, and the long-range vision camera 50 on the front side of the housing 10 after connecting to the corresponding interfaces.

In other embodiments, depending on the extension direction (routing direction) of the power supply cables and communication cables, the power supply interface 21 and communication interface 22 may also extend from the left, right, top, or bottom sides of the housing 10. Alternatively, the power supply interface 21 and the communication interface 22 may be partially disposed inside the housing 10, with only a portion exposed outside the housing 10 (e.g., only end faces of the interfaces exposed through openings of the housing 10). Any arrangement is acceptable provided that the connected power supply cables and communication cables do not obstruct the binocular vision camera 30, the optical window 41 of the LiDAR 40, or the long-range vision camera 50.

Sealing elements are provided or sealant is filled at the contact surfaces between the housing 10 and each of the binocular vision camera 30, the optical window 41 of the LiDAR, the long-range vision camera 50, the power supply interface 21, and the communication interface 22.

The housing 10 includes an upper housing 11 and a lower housing 12 that form a cavity when engaged with each other, secured by screws. Sealing elements are provided or a sealant is filled between the upper housing 11 and the lower housing 12. In one embodiment, the control circuit board 20, binocular vision camera 30, LiDAR 40, and long-range vision camera 50 are screw-fastened to the lower housing 12. In other embodiments, the control circuit board 20, binocular vision camera 30, LiDAR 40, and long-range vision camera 50 are screw-fastened to the upper housing 11; or alternatively, some of the control circuit board 20, binocular vision camera 30, LiDAR 40, and long-range vision camera 50 are fastened to the upper housing 11, while others are fastened to the lower housing 12.

Those skilled in the art will appreciate that: first, when the binocular vision camera 30, LiDAR 40, and long-range vision camera 50 are all mounted on the lower housing 12, extremely high relative dimensional accuracy among them can be achieved. This effectively ensures precise alignment between the image data captured by the binocular vision camera 30 and the three-dimensional point cloud data acquired by the LiDAR 40, thereby enhancing the overall perception accuracy of the integrated sensor 100; second, sealing elements (e.g., sealing rings) are provided or sealant is filled at the contact surfaces (mounting surfaces) between the housing 10 and each of the binocular vision camera 30, the optical window 41 of the LiDAR, the long-range vision camera 50, the power supply interface 21, and the communication interface 22, as well as between the upper housing 11 and the lower housing 12, ensuring the cavity of the integrated sensor 100 being dustproof and waterproof.

Further, heat sinks 11a and 12a are provided on the surfaces of the upper housing 11 and the lower housing 12.

In some embodiments of the present application, the heat sink 11a is disposed on the upper surface of the upper housing 11, close to the control circuit board 20. The heat sink 12a is disposed on the rear surface of lower housing 12, close to the ranging module 42 and a rotating mirror module 43 of LiDAR 40. In other embodiments, heat sinks 11a and 12a may be disposed at other locations on the upper housing 11 and the lower housing 12 based on the heat distribution calculation.

It can be appreciated by the skilled in the art that, the integrated sensor 100 incorporates multiple components such as the control circuit board 20, binocular vision camera 30, LiDAR 40, and long-range vision camera 50, and sealing elements are provided or sealant is filled at the aforementioned contact surfaces (mounting surfaces) to ensure the cavity of the integrated sensor 100 being dustproof and waterproof. Consequently, temperatures within the cavity can easily rise. The heat sinks 11a and 12a disposed on the surfaces of the upper housing 11 and the lower housing 12 facilitates accelerated heat transfer from the cavity to the exterior of the housing 10.

Further, at least one clamping plate 13 is disposed on the control circuit board 20 or within the cavity of the housing10. The binocular vision camera 30, LiDAR 40, and long-range vision camera 50 are respectively connected to the control circuit board 20 via flexible printed circuits (FPC) 31a, 32a, 42a, 42b, 43a, and 50a. The flexible printed circuits 31a, 32a, 42a, 42b, and 50a are secured to the control circuit board 20 or within the cavity of the housing 10 via the clamping plate 13. In other embodiments, the flexible printed circuits 31a, 32a, 42a, 42b, and 50a may also be affixed to the control circuit board 20 or within the cavity of the housing 10.

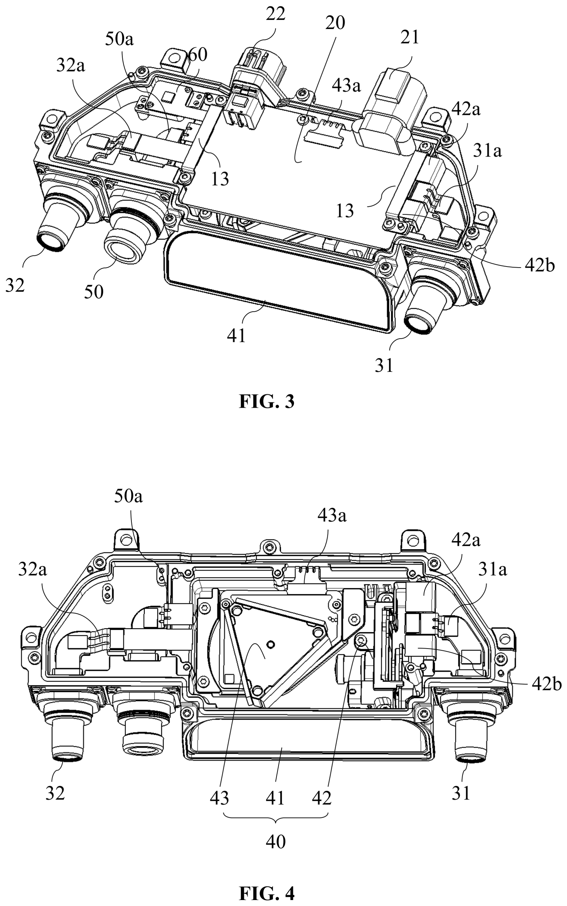

In particular, with reference to FIGS. 3 and 4, in some embodiments of the present application, the left-eye camera 31 is connected to the control circuit board 20 via the flexible circuit board 31a, and the right-eye camera 32 is connected to the control circuit board 20 via the flexible circuit board 32a. The receiving end of the ranging module 42 of the LiDAR 40 is connected to the control circuit board 20 via the flexible circuit board 42a. The transmitting end is connected to the control circuit board 20 via the flexible circuit board 42b. The rotating mirror module 43 of the LiDAR 40 is connected to the control circuit board 20 via the flexible circuit board 43a. The long-range vision camera 50 is connected to the control circuit board 20 via the flexible circuit board 50a.

In the embodiments of the present application, the flexible circuit board 31a, the flexible circuit board 42a, and the flexible circuit board 42b are secured to the left end of the control circuit board 20 by the clamping plate 13 set (e.g., by screw fastening) on the control circuit board 20, and then a stable electrical connection thereof with the control circuit board 20 is made. Flexible circuit board 32a and flexible circuit board 50a are secured to the right end of control circuit board 20 by another clamping plate 13 set (e.g., by screw fastening) on control circuit board 20, and then a stable electrical connection thereof with control circuit board 20 is made.

It can be appreciated by the skilled in the art that, thanks to the high degree of integration of multiple components such as the binocular vision camera 30, LiDAR 40, and long-range vision camera 50, power can be supplied via the multi-pin power supply interface 21 on the control circuit board 20, and data exchange can be accomplished through the multi-pin communication interface 22 on the control circuit board 20. Such a highly integrated design simplifies the power supply circuit, reduces the number of power supply interfaces 21 and communication interfaces 22, thus can improve efficiency and lower costs compared to independent components such as the binocular vision camera 30, LiDAR 40, and long-range vision camera 50. Additionally, the clamping plates 13 prevents the flexible circuit boards 31a, 32a, 42a, 42b, 43a, and 50a from becoming loose under vibrational conditions.

The integrated sensor 100 includes an inertial sensor 60 (Inertial Measurement Unit, IMU) disposed inside the cavity and electrically connected to the control circuit board 20. The inertial sensor 60 is primarily used to measure acceleration, tilt, impact, vibration, rotation, and multi-degree-of-freedom (DoF) motion, serving as a critical component for navigation, orientation, and motion carrier control.

In some embodiments of this application, the inertial sensor 60 is secured inside the cavity of the housing 10 via screws. For example, the inertial sensor 60 is a flexible printed circuit (FPC). Consequently, the inertial sensor 60 can be directly connected to the connection port of the control circuit board 20.

It can be appreciated by the skilled in the art that, the integrated sensor unit 100 may include the binocular vision camera 30, the LiDAR 40, the long-range vision camera 50, and the inertial sensor 60, and can be mounted externally on the vehicle (e.g., on the roof) or internally on the vehicle (e.g., on the front windshield and/or rear windshield), further preventing the drawbacks of scattered sensor layouts.

The control circuit board 20 and the LiDAR 40 are arranged in a stacked configuration. A shielding cover 23 covers at least a portion of the control circuit board 20 corresponding to the LiDAR 40 to prevent the laser beam emitted by the ranging module 42 from being reflected by the control circuit board 20 and forming stray light.

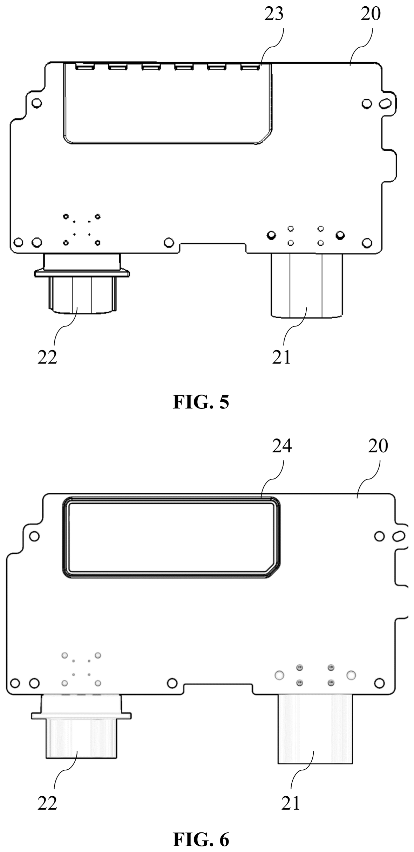

As shown in FIGS. 5 to 7, the LiDAR 40 includes a rotating mirror module 43 disposed within the cavity to deflect the laser beam emitted by the ranging module 42 before exiting through the optical window 41. The control circuit board 20 and the LiDAR 40 are arranged in a stacked configuration. The shielding cover 23 covers at least the area of the control circuit board 20 corresponding to the rotating mirror module 43 to prevent the laser beam emitted by the ranging module 42 from being reflected by the control circuit board 20 and forming stray light. In other embodiments, the shielding cover 23 may also be provided over the entire area of the control circuit board 20 corresponding to the LiDAR 40.

LiDAR 40 can be classified by scanning method as mechanical LiDAR, semi-solid-state LiDAR, and solid-state LiDAR. Semi-solid-state LiDAR decouples the transceiver unit from the scanning component, where the transceiver unit remains stationary while the scanning component rotates under driven by a motor to form multiple laser scanning planes. In one possible embodiment, the LiDAR 40 is a semi-solid-state LiDAR including a ranging module 42 (transceiver unit) and a rotating mirror module 43 (scanning component). The ranging module 42 remains stationary, while the rotating mirror module 43 rotates under driven by a motor, deflecting the laser beam emitted from the transmitting end of the ranging module 42 to form multiple laser scanning planes, thereby realizing detection.

In other embodiments, the LiDAR 40 may also be other types of semi-solid-state LiDAR (e.g., prism-based or micro-mirror-based), mechanical LiDAR, or solid-state LiDAR. It can be appreciated by the skilled in the art that, the control circuit board 20 and the LiDAR 40 (rotating mirror module 43) are arranged in a stacked configuration. The control circuit board 20 is an FR4 substrate with semiconductor devices and can reflect laser beam, causing laser incidence on the control circuit board 20 to undergo secondary or multiple reflections, forming stray light that interferes with the receiving end of the ranging module 42 of the LiDAR (which may also be regarded as interference in acquiring three-dimensional point cloud data). The shielding cover 23 serves to provide electromagnetic shielding for the FR4 substrate and the semiconductor devices positioned on its surface. Additionally, matte stickers with extremely low laser reflectivity may be applied to the surface of the shielding cover 23, or matte materials may be coated/sputtered onto it. Alternatively, the shielding cover 23 itself may be made from matte material. These measures may absorb stray light from any direction within the area covered by the shielding cover 23, thereby eliminating the risk of stray light crosstalk.

The control circuit board 20 is provided with support brackets 24, which maintain a gap with the edges of the control circuit board 20. The shielding cover 23 is connected to the support brackets 24 and extends to the edge of the control circuit board 20.

In the embodiments of the application, the support brackets 24 are connected to the control circuit board 20 via SMT technology. Due to technical limitations of the SMT technology, a gap of at least 1 mm wide must be reserved between the shielding cover support brackets 24 and the edge of the control circuit board 20. This gap exposes portions of the control circuit board 20, resulting in laser reflection. Therefore, multiple mounting clips 23a are spaced along one side of the shielding cover 23. The mounting clips 23a are formed by cutting and bending the edge of the shielding cover 23 at regular intervals. Bent edges 23b are formed on the other sides. The shielding cover 23 is secured onto the support brackets 24 via the mounting clips 23a. The bent edges 23b rest against the control circuit board 20, enabling the shielding cover 23 to remain in a "suspended" state.

In other embodiments, the support brackets 24 may be arranged in multiple directions (e.g., forming a rectangular shape). Mounting clips 23a may be formed on more sides of the shielding cover 23 to allow the shielding cover 23 to engage with the support brackets 24 in multiple directions, thereby maintaining the shielding cover 23 in the "suspended" state.

In other embodiments, the mounting clips 23a may be directly soldered to the bottom surface of the shielding cover 23, avoiding compromising the integrity of the shielding cover 23, thereby enhancing its electromagnetic shielding effectiveness thereof.

It can be appreciated by the skilled in the art that, since the shielding cover 23 is not directly connected to the control circuit board 20, technical limitations of the SMT technology need not be considered. The shielding cover 23 can extend all the way to the edge of the control circuit board 20 (covering the aforementioned gap of at least 1mm width). Additionally, the "suspended" shielding cover 23 provides an attachment surface for the matte sticker, achieving the goal of completely eliminating stray light.

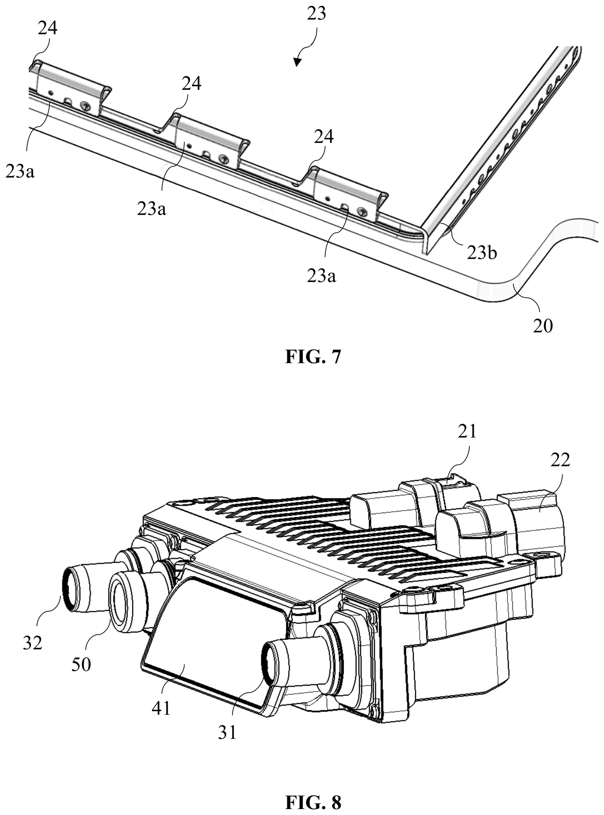

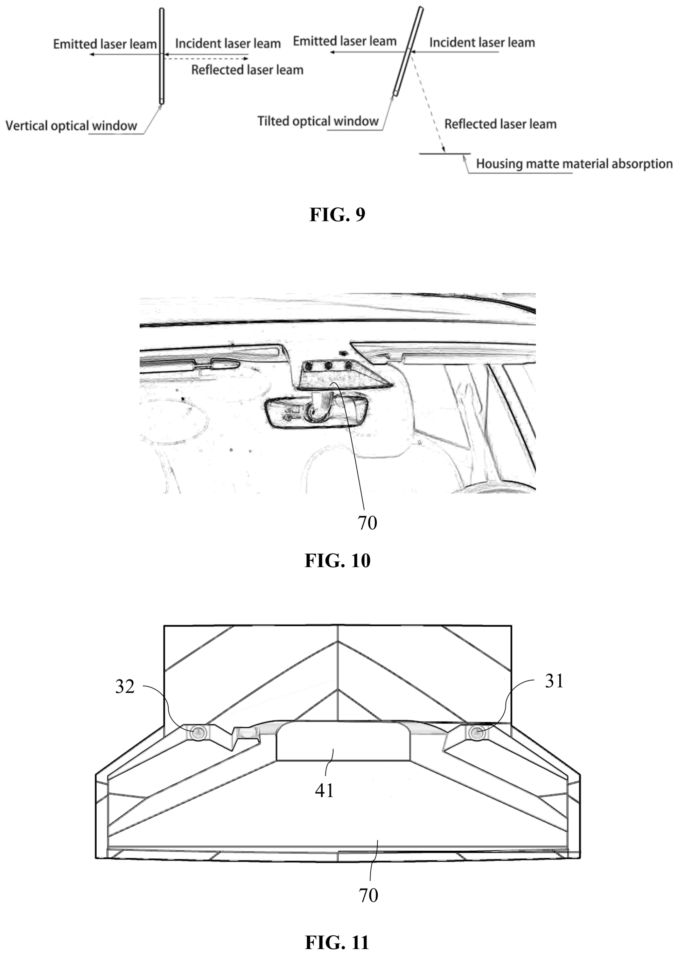

As shown in FIGS. 8 and 9, the bottom of the optical window 41 of the LiDAR 40 is positioned further forward than its top, such that the optical window 41 is tilted in the vertical direction. The tilt angle of the optical window 41 may range from 3° to 65°, preferably 25°.

It can be appreciated by the skilled in the art that, the optical window 41 of the existing LiDAR 40 is vertically oriented (i.e., the incident angle of laser beam emitted from the transmitting end of the ranging module 42 on the optical window 41 is 0°). This results in a portion of the incident laser beam being reflected by the optical window 41, forming intense reflected laser beam (stray light). The reflected laser beam is subsequently received by the receiving end of the ranging module 42, interfering with the imaging of the LiDAR 40. To eliminate reflected laser beam, an anti-reflective coating must be applied to the optical window 41 to suppress reflection. The optical window 41 of the LiDAR 40 of the present application is inclined at a specific angle, which can, on one hand, reduce the intensity of reflected laser beam, and on the other hand, direct the reflected laser beam toward the inner matte surface of the housing 10, resulting in the reflected laser beam being absorbed (preventing them from directly returning to the receiving end of the ranging module 42 and causing interference). For example, the inner surface of the housing 10 can undergo electrophoresis, anodization, or matte paint spraying to enhance absorption of reflected laser beam. This design not only improves the performance of the LiDAR but also eliminates the need for optical anti-reflective coating, thereby reducing production costs.

As shown in FIGS. 10 and 11, a light shield 70 is installed beneath the vision cameras (the binocular vision camera 30 and/or long-range vision camera 50) and the LiDAR 40 which are mounted inside the vehicle and on the front windshield. The primary function of the light shield 70 is to eliminate reflected light on the windshield within the field of view of the vision cameras (the binocular vision camera 30 and/or long-range vision camera 50) and the LiDAR 40, preventing the reflected light from interfering with the vision cameras (the binocular vision camera 30 and/or long-range vision camera 50) and the LiDAR 40. The reflected light comes from light-emitting or highly reflective objects inside the vehicle. Since the windshield reflects stray light more or less from the interior environment of vehicle, the light shield 70 is unavoidable. The width of the light shield 70 depends on the baseline dimension and horizontal field of view size of the binocular vision camera 30, and the overall height of the light shield 70 depends on the height of the optical window 41 and the vertical field of view size of the LiDAR 40. Referring specially to FIG. 11, the existing light shield 70 not only has large width and height but also features a stepped structure, obstructing the driver's view and is not aesthetically pleasing.

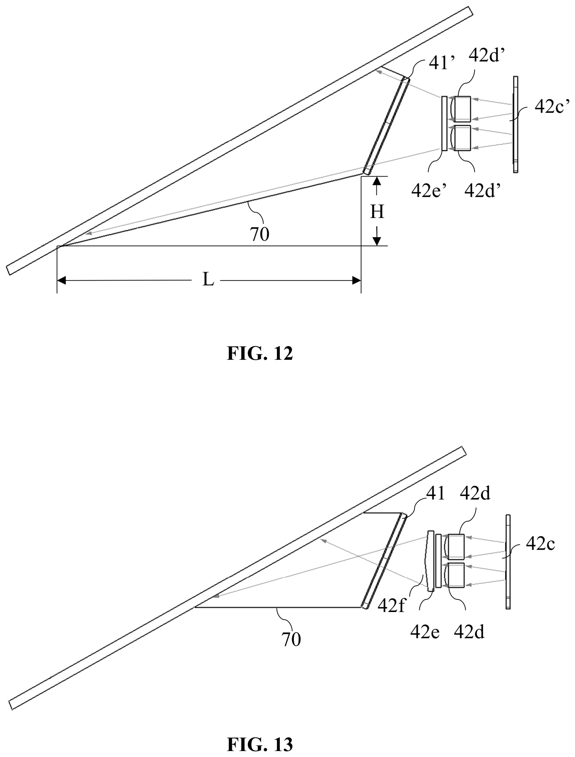

FIG. 12 shows the working optical path of the ranging module 42' of the existing LiDAR. Primarily, the laser beam emitted from a light source board 42c' is collimated (converted into parallel light) by a collimating lens 42d', then diffused at a required angle by the diffuser plate 42e', and finally emitted through the optical window 41'. FIG. 12 indicates the lower boundary position of the existing light shield 70. The existing light shield 70 has relatively large length L and height H, resulting in significant obstruction of the driver's view.

As shown in FIG. 13, the ranging module 42 includes a light source plate 42c configured to emit a laser beam, a collimating lens 42d configured to collimate the laser beam, a diffuser plate 42e configured to diffuse the collimated laser beam in a vertical direction, and a prism 42f configured to converge the diffused laser beam in the vertical direction to reduce the output aperture size of the LiDAR 40.

It can be appreciated by the skilled in the art that, the prism 42f deflects the laser beam by a certain angle and flips it, causing the laser beam to converge in the vertical direction, and significantly raising the lower boundary of the light shield 70. Without altering the field of view of the LiDAR 40, both the length L and height H of the light shield 70 are reduced, minimizing obstruction of the driver's view. Furthermore, after the laser beam is converged vertically, the height of the optical window 41 can also be reduced, thereby lowering manufacturing costs of the LiDAR 40.

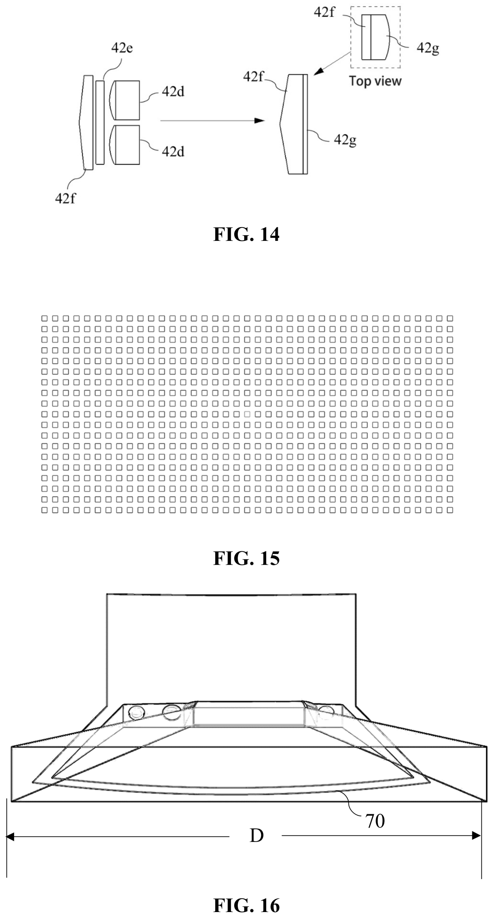

As shown in FIG. 14, in an alternative embodiment, the ranging module 42 includes a light source board 42c configured to emit the laser beam, and a combination of a cylindrical lens 42g and a prism 42f configured to collimate the laser beam and then converge it in the vertical direction to reduce the output aperture of the LiDAR 40.

It can be appreciated by the skilled in the art that, the combination of the cylindrical lens 42g and the prism 42f can be a combination of two individual lenses placed together or a combination lens with one side serving as a prism and the other side serving as a cylindrical lens. The combination of the cylindrical lens 42g and prism 42f can replace the combination of the collimating lens 42d, the diffuser plate 42e, and the prism 42f (achieving the same function), but this configuration reduces the number of lenses, thereby reducing assembly errors in the optical system.

As shown in FIGS. 15 and 16, for the LiDAR 40 equipped with a dot matrix light source, when scanning each frame of the image, the emitted laser beam is deflected by the rotating mirror 43 and forms a vertical rectangular laser scanning plane right forward. Correspondingly, the light shield 70 also has a relatively big width D, thereby obstructing the driver's view.

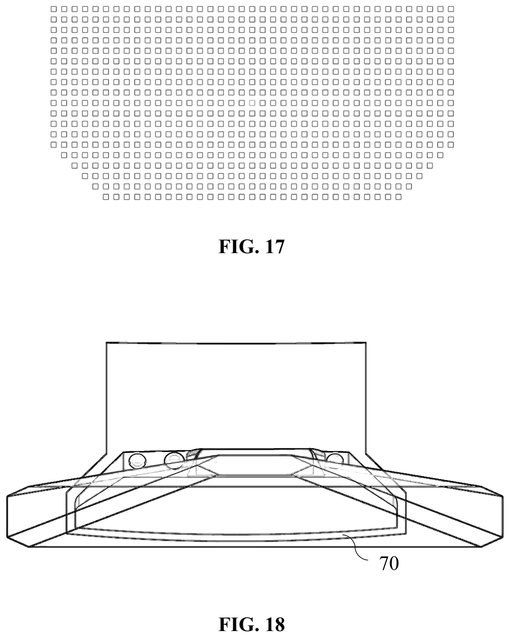

As shown in FIGS. 17 and 18, the light source board 42c includes a dot matrix light source. The control circuit board 20 controls a portion of dot light sources in the dot matrix light sources to turn off, so that the lower left and lower right corners of the rectangular laser scanning plane emitted through the optical window 41 are chamfered. In other embodiments, the control circuit board 20 may control a portion of dot light sources in the dot matrix light sources to turn off, so that the four corners of the rectangular laser scanning plane emitted through the optical window 41 are chamfered.

It can be appreciated by the skilled in the art that, by controlling the algorithm, the dot light sources at the lower left and lower right corners of the dot matrix light sources at starting position can be turned off, which can chamfer the lower left and lower right corners of the rectangular laser scanning plane formed at the ending position. The leading edge of the light shield 70 can also be chamfered, thereby reducing the width D of the leading edge of the light shield 70 and further preventing the light shield 70 from obstructing the driver's view. Although this measure sacrifices part of the field of view of the LiDAR 40, the advantages outweigh the disadvantages as the lower left and lower right corner areas are not the areas that require particular attention from intelligent driving perception.

The present application also provides a mobile platform including any of the aforementioned integrated sensors 100.

Those skilled in the art will appreciate that the mobile platform incorporating the integrated sensor 100 can achieves the same beneficial effects as described above. For example, the drawbacks of scattered sensor layouts and inconsistent fields of view among individual sensors are overcome. The control circuit board 20 may be pre-configured with a synchronization algorithm to synchronize visual images and three-dimensional point cloud data (e.g., an algorithm that controls the binocular vision camera 30 and the ranging module 42 to synchronously emit/receive the same column). This algorithmic synchronization enables pixel-level alignment between images captured by the binocular vision camera 30 and three-dimensional point cloud data acquired by the LiDAR 40, significantly enhancing perception accuracy. The LiDAR 40 may also serve as a safety redundancy for the binocular vision camera 30, allowing for reduced performance requirements on the LiDAR 40. The range and the field of view of the LiDAR 40 need only cover those of the binocular vision camera 30, thereby lowering unit costs compared to an independently working LiDAR 40.

In the description of this specification, terms such as "certain embodiments," "an embodiment," "some embodiments," "example," "specific example," or "some examples" mean that the specific features, structures, materials, or characteristics described in connection with the embodiment or example are included in at least one embodiment or example of the present application. In this specification, the above terminology need not necessarily refer to the same embodiment or example. Furthermore, the specific features, structures, materials, or characteristics described may be appropriately combined in any one or more embodiments or examples. Additionally, where not mutually contradictory, those skilled in the art may combine and integrate different embodiments or examples described herein, as well as features from different embodiments or examples.

In the present application, the terms "first," "second," and "third" are used for descriptive purposes only and should not be construed as indicating or implying relative importance; the term "multiple" refers to two or more unless otherwise explicitly specified. Terms such as "mount," "connect," "connected," and "fix" should be interpreted broadly. For example, "connect" may refer to a fixed connection, a detachable connection, or an integral connection; "connected" may refer to directly connected or indirectly connected via an intermediate medium. A person skilled in the art can understand the specific meaning of the above terms in the present application based on the particular circumstances.

Finally, it should be noted that the above embodiments are provided to illustrate the technical solutions of the present application and are not intended to be restrictive. Although the present application has been described in detail with reference to the embodiments, a person skilled in the art will understand that any modifications or equivalent replacements to the technical solutions of the present application without departing from the spirit and scope of the technical solutions of the present application shall fall within the scope of the claims of the present application.

## Claims

1. An integrated sensor, comprising:
a housing with an internal cavity;
a control circuit board disposed inside the cavity;
a binocular vision camera disposed on the housing, comprising a left-eye camera and a right-eye camera electrically connected to the control circuit board; and
a LiDAR electrically connected to the control circuit board, wherein an optical window of the LiDAR is disposed on the housing, and a ranging module of the LiDAR is disposed inside the cavity and is configured to emit and receive a laser beam which is emitted and returns through the optical window.

2. The integrated sensor according to claim 1, **characterized in that** the binocular vision camera and the ranging module are equipped with photosensitive chips having the same scanning mode, enabling pixel-level alignment between the images captured by the binocular vision camera and the three-dimensional point cloud data acquired by the LiDAR.

3. The integrated sensor according to claim 1, further comprising a long-range vision camera disposed on the housing and electrically connected to the control circuit board.

4. The integrated sensor according to claim 3, **characterized in that** the binocular vision camera, the optical window of the LiDAR, and the long-range vision camera face a front side of the housing; and
the control circuit board is electrically connected to a power supply interface and a communication interface, wherein the power supply interface and the communication interface are partially exposed outside the housing.

5. The integrated sensor according to claim 4, **characterized in that** sealing elements are provided or sealant is filled at contact surfaces between the housing and each of the binocular vision camera, the optical window of the LiDAR, the long-range vision camera, the power supply interface, and the communication interface.

6. The integrated sensor according to claim 1, **characterized in that** the housing comprises an upper housing and a lower housing that are engaged to form the cavity, wherein a sealing element is provided or a sealant is filled between the upper housing and the lower housing.

7. The integrated sensor according to claim 6, **characterized in that** surfaces of the upper housing and the lower housing are provided with heat sinks.

8. The integrated sensor according to claim 3, **characterized in that** the binocular camera, the LiDAR, and the long-range vision camera are respectively connected to the control circuit board via a flexible circuit board which is affixed to the control circuit board or inside the cavity of the housing.

9. The integrated sensor according to claim 3, **characterized in that** at least one clamping plate is disposed on the control circuit board or inside the cavity of the housing; and
the binocular camera, the LiDAR, and the long-range vision camera are respectively connected to the control circuit board via a flexible circuit board which is secured onto the control circuit board or inside the cavity of the housing by the clamping plate.

10. The integrated sensor according to any one of claims 1 to 9, further comprising an inertial sensor disposed inside the cavity and electrically connected to the control circuit board.

11. The integrated sensor according to any one of claims 1 to 9, **characterized in that** the control circuit board and the LiDAR are arranged in a stacked configuration, wherein a shielding cover is provided to cover at least a portion of the control circuit board corresponding to the LiDAR to prevent the laser beam emitted by the ranging module from being reflected by the control circuit board and forming a stray light.

12. The integrated sensor according to claim 11, **characterized in that** the control circuit board is provided with support brackets maintaining a gap from an edge of the control circuit board, wherein the shielding cover is connected to the support brackets and extends to the edge of the control circuit board.

13. The integrated sensor according to any one of claims 1 to 9, **characterized in that** a bottom of the optical window is positioned further forward than a top of the optical window, such that the optical window is tilted in the vertical direction.

14. The integrated sensor according to claim 13, **characterized in that** a tilt angle of the optical window is 3° to 65°.

15. The integrated sensor according to claim 1, **characterized in that** the ranging module comprises:
a light source plate configured to emit a laser beam;
a collimating lens configured to collimate the laser beam;
a diffusion plate configured to diffuse the collimated laser beam in a vertical direction; and
a prism configured to converge the diffused laser beam in the vertical direction to reduce an exit aperture of the LiDAR.

16. The integrated sensor according to claim 1, **characterized in that** the ranging module comprises:
a light source plate configured to emit a laser beam; and
a cylindrical lens and a prism, or a combination lens with one side serving as a prism and the other side serving as a cylindrical lens, configured to collimate the laser beam and then converge it in a vertical direction to reduce the exit aperture of the LiDAR.

17. The integrated sensor according to claim 15 or 16, **characterized in that** the light source board comprises a dot matrix light source, wherein the control circuit board controls a portion of dot light sources in the dot matrix light source to turn off, so that lower left and lower right corners of a rectangular laser scanning plane emitted through the optical window are chamfered.

18. A mobile platform, **characterized in that** the mobile platform comprises an integrated sensor according to any one of claims 1 to 17.
